(19) Europäisches Patentamt
European Patent Office
Office européen des brevets

(11) Publication number: **0 262 557 B1**

(12) # EUROPEAN PATENT SPECIFICATION

(45) Date of publication of patent specification: **27.05.92**

(51) Int. Cl.[5]: **C08G 64/04**, C08G 64/06, G11B 7/26

(21) Application number: **87113835.0**

(22) Date of filing: **22.09.87**

(54) **Polycarbonate and optical disk therefrom.**

(30) Priority: **29.09.86 JP 230896/86**
**29.09.86 JP 230897/86**
**02.10.86 JP 233173/86**

(43) Date of publication of application:
**06.04.88 Bulletin 88/14**

(45) Publication of the grant of the patent:
**27.05.92 Bulletin 92/22**

(84) Designated Contracting States:
**DE FR GB NL**

(56) References cited:
**EP-A- 267 369**
**DE-B- 1 208 073**
**US-A- 3 028 365**
**EP-A- 0 135 203**
**GB-A- 1 122 003**
**US-A- 4 304 899**

(73) Proprietor: **DAICEL CHEMICAL INDUSTRIES CO., LTD.**
**1-banchi, Teppo-cho**
**Sakai-shi Osaka 590(JP)**

(72) Inventor: **Kanno, Tatsuya**
**500, Kamiyobe Yobe-ku**
**Himeji-shi Hyogo(JP)**
Inventor: **Izuka, Akihiro**
**500, Kamiyobe Yobe-ku**
**Himeji-shi Hyogo(JP)**
Inventor: **Katsuki, Tsunehisa**
**500, Kamiyobe Yobe-ku**
**Himeji-shi Hyogo(JP)**
Inventor: **Takahashi, Ikuo**
**940, Shinzaike Aboshi-ku**
**Himeji-shi Hyogo(JP)**
Inventor: **Sasaki, Kenichi**
**940, Shinzaike Aboshi-ku**
**Himeji-shi Hyogo(JP)**

(74) Representative: **Patentanwälte Grünecker, Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to an aromatic polycarbonate and an optical information recording disk in which signals are recorded by means of a laser beam or recorded signals are read by utilizing the reflection or transmission of the laser beam.

A quite high recording density can be provided by an information recording/reproduction system of the DRAW type or the Erasable-DRAW-type in which a spot laser beam is applied to a disk to record signals on the disk by means of minute pits or the signals thus recorded by means of such pits are read by detecting the quantity of reflected or transmitted laser beams. Particularly in the system of the Erasable-DRAW type, the record can be erased or written and images and sounds reproduced therefrom are excellent. Thus, it is expected to employ the system of the Erasable-DRAW type broadly in the recording of images and sounds or reproduction of them and in the recording/reproduction of a large quantity of information. The disk used in the recording/reproduction system need not only be transparent to transmit the laser beams through the disk body but also optically uniform to minimize an error in the readout. When the laser beam is transmitted through the disk body, double refraction occurs mainly due to the thermal stress caused in the cooling and flowing steps of a resin in the molding to form the disk body, molecular orientation and residual stress caused by a change in volume around the glass transition point or temperature. A high optical ununiformity due to the birefringence is a fatal defect of optical disks.

The birefringence of the disk taking place mainly due to the thermal stress caused in the cooling and flowing steps of a resin in the molding to form the disk body, molecular orientation and residual stress can be reduced considerably by selecting the molding conditions suitably. However, it still depends greatly on the intrinsic double refraction, i.e. photoelasticity constant, of the molded resin per se.

The birefringence can be represented as the product of the photoelastic coefficient and residual stress according to the following formula (1):

$$n_1 - n_2 = C(_1 - _2) \qquad (1)$$

wherein:

$n_1$-$n_2$ represents the birefringence,

$_1$ - $_2$ represents the residual stress, and

C represents the photoelastic coefficient

It is apparent that the birefringence of the obtained disk can be reduced by reducing the photoelastic coefficient in the above formula (1) even when the molding conditions are unchanged.

EP-A-0135203 discloses an information carrier for optically readable information built up from a carrier of polycarbonate resin and a metal layer provided thereon, wherein the polycarbonate resin consists of a mixture of 90 to 99.99% by weight of an aromatic polycarbonate, 0.01 to 0.5% by weight of an epoxy compound and 0 to 9.99% by weight additives usual for polycarbonate resins.

It is the object of the present invention to provide an aromatic polycarbonate having a low photoelasticity coefficient and good mechanical properties, as well as an optical information recording disk.

The invention provides an aromatic polycarbonate obtained from 97 to 3 mole % of 4,4'-dihydroxy-2,2,2-triphenylethane and 3 to 97 mole % of 2,2-bis(4-hydroxy-3-isopropylphenyl)propane through a carbonate linkage.

The polycarbonate of the invention preferably has a viscosity-average molecular weight of from 1,000 to 100,000, more preferably 10,000 to 100,000, most preferably 13,000 to 50,000.

The polycarbonate of the invention has a decreased photoelastic coefficient, also called photoelasticity constant, and therefore is prevented from birefringence, also called double refraction.

The invention further provides an optical information recording disk comprising a substrate made of an aromatic polycarbonate obtained from (1) 2,2-bis(4-hydroxy-3-isopropylphenyl)propane, (2) 2,2-bis(4-hydroxyphenyl)propane and 2,2-bis(4-hydroxy-3-isopropylphenyl)propane or (3) 4,4'-dihydroxy-2,2,2-triphenylethane and 2,2-bis(4-hydroxy-3-isopropylphenyl)propane through a carbonate linkage, and a recording layer coated on said substrate, wherein the polycarbonate has a viscosity-average molecular weight from 1,000 to 100,000. The viscosity-average molecular weight is preferably from 13,000 to 50,000.

The polycarbonates used in the optical information recording disk will be explained below with reference to embodiments (1), (2) and (3).

Embodiment (1) comprises a polycarbonate obtained from 2,2-bis(4-hydroxy-3-isopropylphenyl)propane bonded through a carbonate linkage.

An aromatic polycarbonate of the following formula (II):

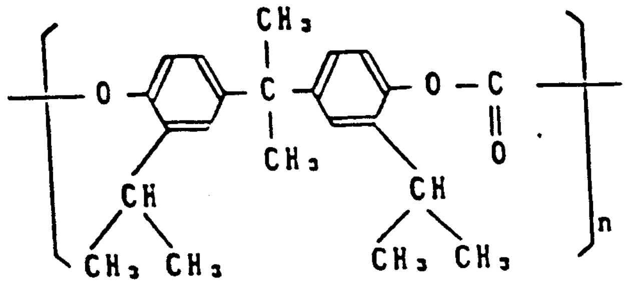

(II)

comprising a bisphenol of the following formula (I):

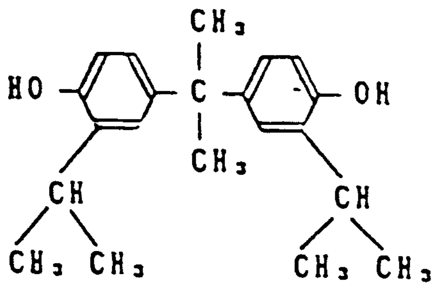

(I)

polymerized through a carbonate linkage can be obtained.

The polymer has a viscosity-average molecular weight of 1,000 to 100,000 and preferably 13,000 to 50,000. When this value is less than 1,000, the produced moldings are brittle and, on the contrary, when it exceeds 100,000, the melt fluidity is lowered to reduce the moldability thereof. Thus, the resin having a viscosity-average molecular weight of less than 1,000 or higher than 100,000 is unsuitable for use as the starting material for the optical disks.

The polycarbonate polymer may comprise another carbonate comonomer as a second component. Such a carbonate component may be any compound capable of being bonded through the carbonate linkage. The amount (weight ratio) of the second component is not limited as long as it does not impair the physical properties of the product.

The polycarbonate polymer can be prepared by the two following processes:

(1) transesterification process:

2,2-Bis(4-hydroxy-3-isopropylphenyl)propane is reacted in the presence of diphenyl carbonate in an amount slightly larger than its stoichiometric amount and an ordinary carbonation catalyst at a temperature of about 160 to 180 ° C under atmospheric pressure for about 30 min while an inert gas is introduced. Then, the pressure is reduced gradually over 2 h to finally 1333 Pa (10 Torr) at about 180 to 220 ° C to complete the precondensation reaction at 220 ° C. Then the reaction is continued at 270 ° C under 1333 Pa (10 Torr) for 30 min and then at 270 ° C under 666,5 Pa (5 Torr) for 20 min. Thereafter the post-condensation reaction is conducted at 270 ° C under a reduced pressure of lower than 66,7 Pa (0.5 Torr), preferably 40,0 to 13,3 Pa (0.3 to 0.1 Torr), for 1.5 to 2.0 h.

Suitable carbonation catalysts used for forming the carbonate linkage include alkali metal and alkaline earth metal catalysts such as lithium, potassium, sodium, calcium and tin catalysts. Examples of them include lithium hydroxide, lithium carbonate, potassium borohydride, potassium hydrogenphosphate, sodium hydroxide, sodium borohydride, calcium hydride, dibutyltin oxide and stannous oxide. Among them, the potassium catalysts are preferred.

(2) Phosgene process:

A three-necked flask is provided with a stirrer, thermometer, gas-inlet tube and gas-outlet tube. 2,2-Bis-(4-hydroxy-3-isopropylphenyl)propane is dissolved in pyridine and gaseous phosgene is introduced under vigorous stirring. This operation is conducted in a powerful draft chamber, since phosgene is virulent. A unit

for decomposing excess phosgene into nonpoisonous compounds with a 10% aqueous sodium hydroxide solution is provided at an end of the outlet tube. Phosgene is introduced from a bomb into the flask through an empty gas washing bottle, a gas washing bottle containing paraffin (to count the number of bubbles) and an empty gas washing bottle sequentially. The gas inlet tube is inserted into the flask and placed above the stirrer and the end thereof is widened like a funnel so that it is be clogged by the formed pyridine salt.

As the gas is introduced into the flask, pyridine hydrochloride is precipitated and the reaction mixture becomes turbid. The reaction mixture is cooled with water to keep the reaction temperature below 30 ° C. As the condensation reaction proceeds, the reaction mixture becomes viscous. Phosgene is introduced until yellow color of phosgene/hydrogen chloride complex no more disappears. After completion of the reaction, methanol is added to precipitate the polymer, which is filtered and dried. The polycarbonate thus formed, being soluble in methylene chloride, pyridine, chloroform, tetrahydrofuran or the like, is dissolved therein and reprecipitated from methanol to purify the same.

Embodiment (2) comprises an aromatic polycarbonate copolymer obtained from 99 to 1 mole %, preferably 90 to 10 mole %, of 2,2-bis(4-hydroxyphenyl)propane and 1 to 99 mole %, preferably 10 to 90 mole %, of 2,2-bis(4-hydroxy-3-isopropylphenyl)propane bonded to each other through a carbonate linkage.

A aromatic polycarbonate comprising bisphenols of the following formula (III) and (I) copolymerized through a carbonate linkage can be obtained:

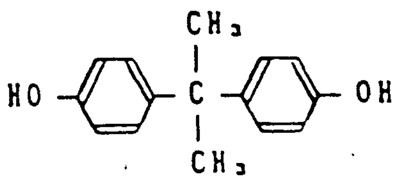

(III)

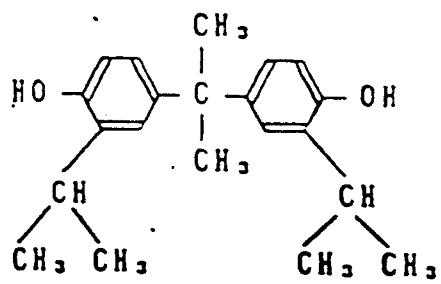

(I)

The amount of the structural unit of the above formula (I) is 1 to 99 mole %. When it is less than 1 mole %, the photoelasticity constant of the obtained aromatic polycarbonate is substantially equal to that of a homopolycarbonate of the compound of the formula (III). On the contrary, when the amount of the structural unit of the above formula (I) exceeds 99 mole %, the glass transition point of the obtained aromatic polycarbonate is far lower than that of the homopolycarbonate of the compound of the formula (III).

The polycarbonate copolymer may comprise a third component in addition to 2,2-bis(4-hydroxyphenyl)-propane and 2,2-bis(4-hydroxy-3-isopropylphenyl)propane. The third component may be any compound capable of being bonded through the carbonate linkage. The amount (weight ratio) of the third component is not limited as long as it does not impair the physical properties of the product.

The present invention relates also to an aromatic polycarbonate copolymer obtained from 97-3 mol% of (IV) 4,4'-dihydroxy-2,2,2-triphenylethane and 3-97 mol% of (I) 2,2-bis-(4-hydroxy-3-isopropylphenyl)propane through a carbonate linkage. According to this invention, there is provided an aromatic polycarbonate copolymer formed by the copolymerization of bisphenols represented by the following formulas (IV) and (I) through polycarbonate linking.

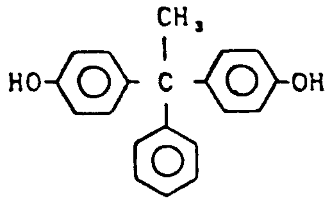

(IV)

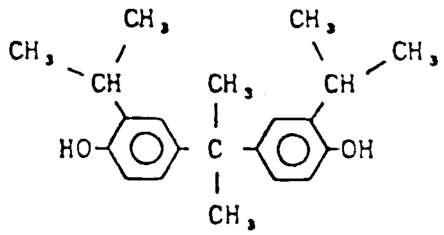

(I)

According to the invention, the amount of the constitutional unit represented by the formula (I) should be 10-90 mol%. With less than 10 mole %, the resulting aromatic polycarbonate has a photoelasticity constant similar to that of a homopolycarbonate only composed of the constitutional unit represented by the formula (IV). Conversely, with more than 90 mol%, the resulting aromatic polycarbonate has a considerably lower glass transition temperature than that of a homopolycarbonate only composed of the constitutional unit represented by the formula (IV).

The above shown copolymers (2) and (3) can be obtained by the same process as shown for the homopolymer (1), that is, the transesterification and the phosgene method. An aqueous solution of an alkali metal hydroxide such as sodium hydroxide may be used as a solvent in the phosgene method.

The aromatic polycarbonates are useful as a starting material for an optical disk to record information with. The disk according to the invention includes the direct read after write type (DRAW) and the erasable direct read after write type (Erasable DRAW) and serves to record signals with a laser beam and read recorded signals with reflection or transmission of a laser beam.

From the practical point of view, the polycarbonate is used as a supporting substrate for a recording layer. The substrate is covered with a recording layer such as evaporated metals to form a recording medium. Two recording disks obtained this way are assembled into one body, for example by bonding with an adhesive or melting and bonding with ultrasonic waves, through a spacer so that the two recording surfaces may be faced to each other. The recording layer may be further covered with a protective layer.

The polycarbonate copolymers having a low photoelasticity constant can be used as a starting material for optical information recording disks wherein signals are recorded by a laser beam or recorded signals are read by utilizing the reflection or transmission of the laser beam.

Figs. 1, 3 and 5 show IR spectra of the copolymers of the present invention prepared in Examples 1, 9 and 17, respectively. Figs. 2, 4 and 6 show NMR spectra of the copolymers of the present invention prepared in Examples 1, 9 and 17, respectively.

Figs. 7 and 8 show IR spectrum and NMR spectrum, respectively, of the polymer obtained in Example 19.

The invention will be illustrated below with reference to examples of the polycarbonate and the optical disk. Example 1 to 18 relate to the polycarbonate (2), Examples 19 and 20 relate to the polycarbonate (1) and Examples 21 and 22 relate to the polycarbonate (3).

In the examples, parts and percentages are given by weight.

Example 1

247 parts (90 mole %) of 2,2-bis(4-hydroxyphenyl)propane, 37 parts (10 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160 °C in a silicone bath while nitrogen was introduced. A solution of potassium borohydride (carbonation catalyst) in phenol prepared previously was added to the melt in an amount of $10^{-3}$ mole % based on the total amount of the bisphenol fed. After aging under stirring at 160 °C in a nitrogen atmosphere for 30 min, the pressure was

reduced to 13330 Pa (100 Torr) at that temperature and the mixture was stirred for 30 min. Further the pressure was reduced to 6665 Pa (50 Torr) at that temperature and the reaction was continued for additional 30 min. The temperature was elevated slowly to 220 °C and the reaction was conducted for 60 min to distill phenol in an amount to 80 % based on the theoretical amount. Then the pressure was reduced to 1333 Pa (10 Torr) at that temperature and the reaction was conducted for 30 min. The temperature was elevated slowly to 270 °C and the reaction was conducted for 30 min. Further the pressure was reduced to 66,7 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20 °C. The viscosity-average molecular weight $\overline{M}v$ calculated from the solution viscosity was 32,000. In its IR spectrum, a characteristic absorption of a carbonate bond was observed at 1760 to 1810 $cm^{-1}$ (Fig. 1). In its $^1$H-NMR spectrum, absorptions due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.2 to 7.5 ppm was observed (Fig. 2). From the results of the determination with DSC (differential scanning calorimeter; Perkin-Elmer 2C), it was found that the glass transition point Tg was 139 °C. The photoelasticity constant C was 74 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis-(4-hydroxy-3-isopropylphenyl)propane in a ratio of 9:1.

The devices used in the measurement were an IR spectrometer (IR-810; a product of Nippon Bunkô Co.), a $^1$H-NMR device (JNM-MH-100; a product of JEOL, Ltd.) and a DSC [(differential scanning calorimeter (Perkin-Elmer 2C)]. The photoelasticity constant was determined with a device made by the present inventors. The photoelasticity constant was determined by applying various tensile stresses to test pieces (50 mm x 10 mm x 1 mm) lengthwise, measuring the double refraction, putting the value in the above-mentioned formula (1) and determining the photoelasticity constant from the gradient. The photoelasticity constant of 2,2-bis(4-hydroxyphenyl)propane polycarbonate was 82 Brewsters ($10^{-12}$ $m^2/N$).

Example 2

A three-necked flask was provided with a stirrer, thermometer, gas-inlet tube and gas-outlet tube. 247 parts (90 mole %) of 2,2-bis(4-hydroxyphenyl)propane and 37 parts (10 mole %) of 2,2-bis(4-hydroxy-3-isopropylphenyl)propane were dissolved in a 10% aqueous sodium hydroxide solution. Dichloromethane was added to the solution thus prepared. Phosgene gas was introduced under vigorous stirring. Phosgene was introduced from a bomb into the flask through an empty gas washing bottle, a gas washing bottle containing water and an empty gas washing bottle sequentially. The reaction temperature was kept below 25 °C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20 °C. The viscosity-average molecular weight $\overline{M}v$ calculated from the solution viscosity was 35,000. From the fact that results similar to those obtained in Example 1 were obtained by the instrumental analysis conducted in the same manner as in Example 1, the formed polymer was identified as a polycarbonate copolymer comprising 2,2-bis-(4-hydroxyphenyl)propane and 2,2-bis(4-hydroxy-3-isopropylphenyl)propane in a ratio of 9:1.

Example 3

219 parts (80 mole %) of 2,2-bis-(4-hydroxyphenyl)propane, 75 parts (20 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160 °C in a silicone bath while nitrogen was introduced. A solution of potassium borohydride (carbonation catalyst) in an amount of $10^{-3}$ mole % based on the total amount of the bisphenol fed. After aging under stirring at 160 °C in a nitrogen atmosphere for 30 min, the pressure was reduced to 13330 Pa (100 Torr) at that temperature and the mixture was stirred for 30 min. Further the pressure was reduced to 6665 Pa (50 Torr) at that

temperature and the reaction was continued for additional 30 min. The temperature was elevated slowly to 220°C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270°C and the reaction was conducted for 30 min. Further the pressure was reduced to 66,7 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20°C. The viscosity-average molecular weight $\overline{M}v$ calculated from the solution viscosity was 29,000. In its IR spectrum, a characteristic absorption of a carbonate bond was observed at 1760 to 1810 $cm^{-1}$. In its $^1$H-NMR spectrum, absorption due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.0 to 7.3 ppm were observed. From the results of the determination with DSC, it was found that the glass transition point Tg was 130°C. The photoelasticity constant C was 64 Brewsters ($10^{-12}$) $m^2$/N). From the integrated value of the NMR chart, it was confirmed that the polymer was a polycarbonate copolymer comprising 2,2-bis(4-hydroxyphenyl)-propane and 2,2-bis(4-hydroxy-3-isopropylphenyl)propane in a ratio of 4:1.

Example 4

A three-necked flask was provided with a stirrer, thermometer, gas-inlet tube and gas-outlet tube. 219 parts (80 mole %) of 2,2-bis(4-hydroxyphenyl)propane and 75 parts (20 mole %) of 2,2-bis(4-hydroxy-3-isopropylphenyl)propane were dissolved in a 10% aqueous sodium hydroxide solution. Dichloromethane was added to the solution thus prepared. Phosgene gas was introduced under vigorous stirring. Phosgene was introduced from a bomb into the flask through an empty gas washing bottle, a gas washing bottle containing water and an empty gas washing bottle sequentially. The reaction temperature was kept below 25°C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20°C. The viscosity-average molecular weight $\overline{M}v$ calculated from the solution viscosity was 33,000. From the fact that results similar to those obtained in Example 3 were obtained by the instrumental analysis conducted in the same manner as in Example 3, the formed polymer was identified as a polycarbonate copolymer comprising 2,2-bis-(4-hydroxyphenyl)propane and 2,2-bis(4-hydroxy-3-isopropylphenyl)propane in a ratio of 4:1.

Example 5

192 parts (70 mole %) of 2,2-bis-(4-hydroxyphenyl)propane, 112 parts (30 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160°C in a silicone bath while nitrogen was introduced. A solution of potassium borohydride (carbonation catalyst) in phenol prepared previously was added to the melt in an amount of $10^{-3}$ molar % based on the total amount of the bisphenol fed. After aging under stirring at 160°C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 30 min. The temperature was elevated slowly to 220°C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270°C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 66,7 to 40,0 Pa (0.1 to 0.3 Torr) for 2 h. The resulting polymer was taken out and cooled in a nitrogen atmosphere and its

solution viscosity was determined using dichloromethane as the solvent at 20 ° C. The viscosity-average molecular weight $\overline{M}v$ calculated from the solution viscosity was 30,000. In its IR spectrum, a characteristic absorption of a carbonate bond was observed at 1760 to 1810 $cm^{-1}$. In its $^1$H-NMR spectrum, absorption due to hydrogen in the methyl group of an isopropyl group at 1.2 ppm, hydrogen in the methyl group of a propane at 1.7 ppm, hydrogen in the methine group of an isopropyl group at 3.2 ppm and a phenyl group at 7.18 to 7.5 ppm were observed. From the results of the determination with DSC, it was found that the glass transition point Tg was 121 ° C. The photoelasticity constant C was 61 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis(4-hydroxy-3-isopropylphenyl)propane in a ratio of 7:3

Example 6

A three-necked flask was provided with a stirrer, thermometer, gas-inlet tube and gas-outlet tube. 192 parts (70 mole %) of 2,2-bis(4-hydroxyphenyl)propane and 122 parts (30 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle, a gas washing bottle containing water and an empty gas washing bottle sequentially. The reaction temperature was kept below 25 ° C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20 ° C. The viscosity-average molecular weight $\overline{M}v$ calculated from the solution viscosity was 35,000. From the fact that results similar to those obtained in Example 5 were obtained by the instrumental analysis conducted in the same manner as in Example 5, the formed polymer was identified as a polycarbonate copolymer comprising 2,2-bis-(4-hydroxyphenyl)propane and 2,2-bis(4-hydroxy-3-isopropylphenyl)propane in a ratio of 7:3.

Example 7

164 parts (60 mole %) of 2,2-bis-(4-hydroxyphenyl)propane, 150 parts (40 mole %) of 2,2-bis(4-hydroxy-3-isopropylphenyl)propane and 264 parts of disphenyl carbonate were placed in a 3-ℓ three-necked flask. After repeating degassing and nitrogen purge five times, the mixture was molten at 160 ° C in a silicone bath while nitrogen was introduced. A solution of potassium borohydride (carbonation catalyst) in phenol prepared previously was added to the melt in an amount of $10^{-3}$ mole % based on the total amount of the bisphenol fed. After aging under stirring at 160 ° C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 60 min. The temperature was elevated slowly to 220 ° C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270 ° C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20 ° C. The viscosity-average molecular weight $\overline{M}v$ calculated from the solution viscosity was 29,000. In its IR spectrum, a characteristic absorption of a carbonate bond was observed at 1760 to 1810 $cm^{-1}$. In its $^1$H-NMR spectrum, absorption due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.2 to 7.4 ppm were observed. From the results of the determination with DSC, it was found that the glass transition point Tg was 114 ° C. The photoelasticity constant C was 56 Brewsters ($10^{-12}$ $m^2/N$). From the integrated value of the NMR chart, it was confirmed that the polymer was a polycarbonate copolymer

comprising 2,2-bis(4-hydroxyphenyl)propane and 2,2-bis(4-hydroxy-3-isopropylphenyl)propane in a ratio of 3:2.

Example 8

A three-necked flask was provided with a stirrer, thermometer, gas-inlet tube and gas-outlet tube. 164 parts (60 mole %) of 2,2-bis(4-hydroxyphenyl)propane and 150 parts (40 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle; a gas washing bottle containing water and an empty gas washing bottle sequentially. The reaction temperature was kept below 25 °C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20 °C . The viscosity-average molecular weight $\overline{M}v$ calculated from the solution viscosity was 31,000. From the fact that results similar to those obtained in Example 7 were obtained by the instrumental analysis conducted in the same manner as in Example 7, the formed polymer was identified as a polycarbonate copolymer comprising 2,2-bis-(4-hydroxyphenyl)propane and 2,2-bis(4-hydroxy-3-isopropylphenyl)propane in a ratio of 3:2.

Example 9

137 parts (50 mole %) of 2,2-bis-(4-hydroxyphenyl)propane, 187 parts (50 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160 °C in a silicone bath while nitrogen was introduced. A solution of potassium borohydride (carbonation catalyst) in phenol prepared previously was added to the melt in an amount of $10^{-3}$ molar % based on the total amount of the bisphenol fed. After aging under stirring at 160 °C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 60 min. The temperature was elevated slowly to 220 °C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270 °C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20 °C. The viscosity-average molecular weight $\overline{M}v$ calculated from the solution viscosity was 27,000. In its IR spectrum, a characteristic absorption of a carbonate bond was observed at 1760 to 1810 $cm^{-1}$ (Fig. 3). In its $^1H$-NMR spectrum, absorption due to hydrogen in the methyl group of an isopropyl group at 1.2 ppm, hydrogen in the methyl group of an isopropyl group at 3.2 ppm and a phenyl group at 7.1 to 7.6 ppm were observed (Fig. 4). From the results of the determination with DSC, it was understood that the glass transition point Tg was 107 °C. The photoelasticity constant C was 55 Brewsters ($10^{-12}$ $m^2/N$). From the integrated value of the NMR chart, it was confirmed that the polymer was a polycarbonate copolymer comprising 2,2-bis(4-hydroxyphenyl)-propane and 2,2-bis(4-hydroxy-3-isopropylphenyl)propane in a ratio of 1:1.

Example 10

A three-necked flask was provided with a stirrer, thermometer, gas-inlet tube and gas-outlet tube. 137 parts (50 mole %) of 2,2-bis(4-hydroxyphenyl)propane and 187 parts (50 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring.

Phosgene was introduced from a bomb into the flask through an empty gas washing bottle, a gas washing bottle containing water and an empty gas washing bottle sequentially. The reaction temperature was kept below 25°C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20°C. The viscosity-average molecular weight $\overline{M}v$ calculated from the solution viscosity was 29,000. From the fact that results similar to those obtained in Example 9 were obtained by the instrumental analysis conducted in the same manner as in Example 9, the formed polymer was identified as a polycarbonate copolymer comprising 2,2-bis-(4-hydroxyphenyl)propane and 2,2-bis(4-hydroxy-3-isopropylphenyl)propane in a ratio of 1:1.

Example 11

110 parts (40 mole %) of 2,2-bis-(4-hydroxyphenyl)propane, 225 parts (60 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160°C in a silicone bath while nitrogen was introduced. A solution of potassium borohydride (carbonation catalyst) in phenol prepared previously was added to the melt in an amount of $10^{-3}$ molar % based on the total amount of the bisphenol fed. After aging under stirring at 160°C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 60 min. The temperature was elevated slowly to 220°C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270°C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20°C. The viscosity-average molecular weight $\overline{M}v$ calculated from the solution viscosity was 28,000. In its IR spectrum, a characteristic absorption of a carbonate bond was observed at 1760 to 1810 $cm^{-1}$. In its $^{1}H$-NMR spectrum, absorption due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.2 to 7.5 ppm were observed. From the results of the determination with DSC, it was found that the glass transition point Tg was 103°C. The photoelasticity constant C was 49 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis(4-hydroxy-3-isopropylphenyl)propane in a ratio of 2:3.

Example 12

A three-necked flask was provided with a stirrer, thermometer, gas-inlet tube and gas-outlet tube. 110 parts (40 mole %) of 2,2-bis(4-hydroxyphenyl)propane and 225 parts (60 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle, a gas washing bottle containing water and an empty gas washing bottle sequentially. The reaction temperature was kept below 25°C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20° C. The viscosity-average molecular weight $\overline{M}v$ calculated from the solution viscosity was 31,000. From the fact that results similar to those obtained in Example 11 were obtained by the instrumental analysis conducted in the same manner as in Example 11, the formed polymer was identified as a polycarbonate copolymer comprising 2,2-bis-(4-hydroxyphenyl)propane and 2,2-bis(4-hydroxy-3-isopropylphenyl)propane in a ratio of 2:3.

Example 13

82 parts (30 mole %) of 2,2-bis-(4-hydroxyphenyl)propane, 262 parts (70 mole %) of 2,2-bis(4-hydroxy-3-isopropylphenyl)propane and 264 parts of diphenyl carbonate were placed in a 3-ℓ three-necked flask. After repating degassing and nitrogen purge five times, the mixture was molten at 160° C in a silicone bath while nitrogen was introduced. A solution of potassium borohydride (carbonation catalyst) in phenol prepared previously was added to the melt in an amount of $10^{-3}$ mole % based on the total amount of the bisphenol fed. After aging under stirring at 160° C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 60 min. The temperature was elevated slowly to 220° C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270° C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20° C. The viscosity-average molecular weight $\overline{M}v$ calculated from the solution viscosity was 25,000. In its IR spectrum, a characteristic absorption of a carbonate bond was observed at 1760 to 1810 $cm^{-1}$. In its $^1H$-NMR spectrum, absorption due to hydrogen in the methyl group of an isopropyl group group at 1.2 ppm, hydrogen in the methyl group of propane at 1.7 ppm, hydrogen in the methine group of an isopropyl group at 3.2 ppm and a phenyl group at 7.1 to 7.5 ppm were observed. From the results of the determination with DSC, it was found that the glass transition point Tg was 93° C. The photoelasticity constant C was 41 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis(4-hydroxy-3-isopropylphenyl)propane in a ratio of 3:7.

Example 14

A three-neck flasked was provided with a stirrer, thermometer, gas-inlet tube and gas-outlet tube. 82 parts (30 mole %) of 2,2-bis(4-hydroxyphenyl)propane and 262 parts (70 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle, a gas washing bottle containing water and an empty gas washing bottle sequentially. The reaction temperature was kept below 25° C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20° C. The viscosity-average molecular weight $\overline{M}v$ calculated from the solution viscosity was 29,000. From the fact that results similar to those obtained in Example 13 were obtained by the instrumental analysis conducted in the same manner as in Example 13, the formed polymer was identified as a polycarbonate copolymer comprising 2,2-bis-(4-hydroxyphenyl)propane and 2,2-bis(4-hydroxy-3-isopropylphenyl)propane in a ratio of 3:7.

Example 15

55 parts (20 mole %) of 2,2-bis-(4-hydroxyphenyl)propane, 300 parts (80 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160° C in a silicone bath while nitrogen was introduced. A solution of potassium borohydride (carbonation catalyst) in phenol prepared previously was added to the melt in an amount of $10^{-3}$ mole % based on the total amount of the bisphenol fed. After aging under stirring at 160° C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for additional 60 min. The temperature was elevated slowly to 220° C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270° C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20° C. The viscosity-average molecular weight $\overline{M}v$ calculated from the solution viscosity was 27,000. In its IR spectrum, a characteristic absorption of a carbonate bond was observed at 1760 to 1810 $cm^{-1}$. In its $^1H$-NMR spectrum, absorption due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.0 to 7.3 ppm were observed. From the results of the determination with DSC, it was found that the glass transition point Tg was 90° C. The photoelasticity constant C was 38 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis(4-hydroxy-3-isopropylphenyl)propane in a ratio of 1:4.

Example 16

A three-necked flask was provided with a stirrer, thermometer, gas-inlet tube and gas-outlet tube. 55 parts (20 mole %) of 2,2-bis(4-hydroxyphenyl)propane and 300 parts (80 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle, a gas washing bottle containing water and an empty gas washing bottle sequentially. The reaction temperature was kept below 25° C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20° C. The viscosity-average molecular weight $\overline{M}v$ calculated from the solution viscosity was 29,000. From the fact that results similar to those obtained in Example 15 were obtained by the instrumental analysis conducted in the same manner as in Example 15, the formed polymer was identified as a polycarbonate copolymer comprising 2,2-bis-(4-hydroxyphenyl)propane and 2,2-bis(4-hydroxy-3-isopropylphenyl)propane in a ratio of 1:4.

Example 17

27 parts (10 mole %) of 2,2-bis-(4-hydroxyphenyl)propane, 337 parts (90 mole %) of 2,2-bis(4-hydroxy-3-isopropylphenyl)propane and 264 parts of diphenyl carbonate were placed in a 3-ℓ three-necked flask. After repeating degassing and nitrogen purge five times, the mixture was molten at 160° C in a silicone bath while nitrogen was introduced. A solution of potassium borohydride (carbonation catalyst) in phenol prepared previously was added to the melt in an amount of $10^{-3}$ mole % based on the total amount of the bisphenol fed. After aging under stirring at 160° C in a nitrogen atmosphere for 30 min, the pressure was reduced to 13330 Pa (100 Torr) at that temperature and the mixture was stirred for 30 min. Further the pressure was reduced to 6665 Pa (50 Torr) at that temperature and the reaction was continued for

additional 60 min. The temperature was elevated slowly to 220°C and the reaction was conducted for 60 min. The amount of phenol distilled until this step was 80% based on the theoretical amount. Then the pressure was reduced to 1333 Pa (10 Torr) at that temperature and the reaction was conducted for 30 min. The temperature was elevated slowly to 270°C and the reaction was conducted for 30 min. Further the pressure was reduced to 666,5 Pa (5 Torr) at that temperature and the reaction was conducted for 30 min. The precondensation was thus completed and a nearly theoretical amount of phenol was distilled until this step. Thereafter the postcondensation reaction was conducted at that temperature under 13,3 to 40,0 Pa (0.1 to 0.3 Torr) for 2 h. The resulting polymer was taken out and cooled in a nitrogen atmosphere and its solution viscosity was determined using dichloromethane as the solvent at 20°C. The viscosity-average molecular weight $\overline{M}v$ calculated from the solution viscosity was 25,000. In its IR spectrum, a characteristic absorption of a carbonate bond was observed at 1760 to 1810 $cm^{-1}$ (Fig. 5). In its $^{1}H$-NMR spectrum, absorption due to hydrogen in the methyl group of an isopropyl group at 1.2 ppm, hydrogen in the methyl group of propane at 1.7 ppm, hydrogen in the methine group of an isopropyl group at 3.2 ppm and a phenyl group at 7.2 to 7.4 ppm were observed (Fig. 6). From the results of the determination with DSC, it was found that the glass transition point Tg was 85°C. The photoelasticity constant C was 35 Brewsters ($10^{-12}$ $m^2/N$). From the integrated value of the NMR chart, it was confirmed that the polymer was a polycarbonate copolymer comprising 2,2-bis(4-hydroxyphenyl)propane and 2,2-bis(4-hydroxy-3-isopropylphenyl)propane in a ratio of 1:9.

Example 18

A three-necked flask was provided with a stirrer, thermometer, gas-inlet tube and gas-outlet tube. 27 parts (10 mole %) of 2,2-bis(4-hydroxyphenyl)propane and 337 parts (90 mole %) of 2,2-bis(4-hydroxy-3-isopropylphenyl)propane were dissolved in a 10% aqueous sodium hydroxide solution. Dichloromethane was added to the solution thus prepared. Gaseous phosgene was introduced under vigorous stirring. Phosgene was introduced from a bomb into the flask through an empty gas washing bottle, a gas washing bottle containing water and an empty gas washing bottle sequentially. The reaction temperature was kept below 25°C with water during the introduction of gaseous phosgene. As the condensation reaction proceeded, the solution became viscous. Phosgene was introduced until the yellow color of the phosgene/hydrogen chloride complex no more disappeared. After completion of the reaction, the reaction solution was poured into methanol, the mixture was filtered and the filtration residue was washed with water. This procedure was repeated. The polycarbonate thus formed in the form of a solution in dichloromethane was reprecipitated from methanol to purify same.

After the purification followed by drying, the solution viscosity of the product was determined using dichloromethane as the solvent at 20°C. The viscosity-average molecular weight $\overline{M}v$ calculated from the solution viscosity was 28,000. From the fact that results similar to those obtained in Example 17 were obtained by the instrumental analysis conducted in the same manner as in Example 17, the formed polymer was identified as a polycarbonate copolymer comprising 2,2-bis-(4-hydroxyphenyl)propane and 2,2-bis(4-hydroxy-3-isopropylphenyl)propane in a ratio of 1:9.

Example 19

30.72 g, (0.12 mole, 256 parts) of 2,2-bis(4-hydroxy-3-isopropylphenyl)propane and 26.35 g (0.123 mole, 215 parts) of diphenyl carbonate were placed in a 3-ℓ three-necked flask. After repeating degassing and nitrogen purge five times, the mixture was molten at 160°C in a silicone bath while nitrogen was introduced. A solution of potassium borohydride (carbonation catalyst) in phenol prepared previously was added to the melt in an amount of 0.5 mℓ ($10^{-3}$ mole % based on the total amount of the bisphenol fed). After stirring at 160°C in a nitrogen atmosphere for 30 min, the pressure was reduced to 13330 Pa (100 Torr) at that temperature in 15 min and the mixture was kept under 13330 Pa (100 Torr) for additional 15 min. Further the pressure was reduced to 6665 Pa (50 Torr) at that temperature and the reaction was continued for additional 30 min. The temperature was elevated slowly to 220°C and the reaction was conducted for 30 min. Then the pressure was reduced to 1333 Pa (10 Torr) at that temperature and the reaction was conducted for 30 min. The temperature was elevated slowly to 270°C and the reaction was conducted for 30 min. Further the pressure was reduced to 666,5 Pa (5 Torr) at that temperature and the reaction was conducted for 30 min. Thereafter the post-condensation reaction was conducted at that temperature under 13,3 to 40,0 Pa (0.1 to 0.3 Torr) for 1.5 h. The resulting polymer was taken out and cooled in a nitrogen atmosphere and its solution viscosity was determined using methylene chloride as the solvent at 20°C. The viscosity-average molecular weight $\overline{M}v$ calculated from the solution viscosity was

23,000. In its IR spectrum, a characteristic absorption of a carbonate bond was observed at 1,760 to 1,800 $cm^{-1}$ (Fig. 7). In its $^1H$-NMR spectrum, absorptions of hydrogen in the methyl group of an isopropyl group at 1.22 ppm (doublet), hydrogen in the methyl group of propane at 1.75 ppm, hydrogen in the methine group of an isopropyl group at 3.3 ppm (septet) and a phenyl group at 7.3 ppm were observed (Fig. 8). From the results of the determination with DSC (differential scanning calorimeter), it was found that the glass transition point Tg was 87°C. The photoelasticity constant C was 39 Brewsters ($10^{-12}$ $m^2$/N).

The devices used in the measurement were an IR spectrometer (IR-810; a product of Nippon Bunkô Co.), a $^1H$-NMR device (JNM-MH-100; a product of JEOL, Ltd.) and a DSC [differential scanning calorimeter (Perkin-Elmer 2C)]. The photoelasticity constant was determined with a device made by the present inventors. The photoelasticity constant of the polycarbonate of 2,2-bis(4-hydroxyphenyl)propane determined with this device was 82 Brewsters. The photoelasticity constant was determined by applying various tensile stresses to test pieces (50 mm x 10 mm x 1 mm) lengthwise, measuring the double refraction, putting the value in the above-mentioned formula (1) and determining the photoelasticity constant from the gradient.

Example 20

A 500-mℓ three-necked flask was provided with a stirrer, thermometer, gas-inlet tube and gas-outlet tube. 20 g of 2,2-bis(4-hydroxy-3-isopropylphenyl)propane was dissolved in 200 mℓ of pyridine. Gaseous phosgene was introduced under vigorous stirring. This operation was conducted in a powerful draft chamber, since phosgene is virulent.

Phosgene was introduced from a bomb into the flask through an empty gas washing bottle, a gas washing bottle containing paraffin (to count the number of bubbles) and an empty gas washing bottle sequentially. The gas inlet tube was inserted into the flask and placed above the stirrer and the end thereof was widened like a funnel so that it is not clogged by the formed pyridine salt.

As the gas was introduced into the flask, pyridine hydrochloride was precipitated and the reaction mixture became turbid. The reaction temperature was kept below 30°C by cooling with water. As the condensation reaction proceeded, the solution became viscous. Phosgene was introduced until the yellow color of the phosgene/hydrogen chloride complex no more disappeared. After completion of the reaction, 300 mℓ of methanol was added to the reaction solution to precipitate the polymer, which was filtered and the filtration residue was dried. The polycarbonate thus formed was reprecipitated from methanol to purify same.

After the purification followed by drying, the solution viscosity of the product was determined using methylene chloride as the solvent at 20°C. The viscosity-average molecular weight $\overline{M}v$ calculated from the solution viscosity was 28,000.

Since the product was analyzed in the same way as shown in Example 19 and the same result as shown in Example 19 was obtained, it was identified as a polycarbonate of 2,2-bis(4-hydroxy-3-isopropylphenyl)propane.

Example 21

In a 3-liter three-mouth flask were placed 174 parts by weight (50 mole %) of 4,4′-dihydroxy-2,2,2-triphenylethane, 187 parts by weight (50 mole %) of 2,2-bis-(4-hydroxy-3-isopropylphenyl)propane, and 264 parts of diphenyl carbonate. Deaeration and replacement with nitrogen were repeated five times. The reactants were melted in a silicone bath while nitrogen was introduced into the flask. To the flask was added potassium boron hydride ($10^{-3}$ mole % based on the total amount of phenol charged), a catalyst to form the carbonate linkage, which has previously been dissolved in phenol. Reaction was carried out with stirring under nitrogen at 160°C for 30 min. Reaction was continued with stirring at 160°C and 13330 Pa (100 Torr) for 30 min. Reaction was further continued at 160°C and 6665 Pa (50 Torr) for 60 min. The reaction temperature was raised to 220°C and reaction was continued for 60 min. Up to this stage of reaction, phenol was distilled away as much as 80% of the theoretical amount. Reaction was continued at 220°C and 1333 Pa (10 Torr) for 30 min. The reaction temperature was gradually raised to 270°C, the reaction was carried out at 270°C for 30 min. Reaction was continued at 270°C and 666,5 Pa (5 Torr) for 30 min. Up to this stage of reaction, almost all the theoretical amount of phenol was distilled away and the precondensation step was completed. The post-condensation step was carried out at 270°C and 13,3 to 40,0 Pa (0.1-0.3 Torr) for 2 h. The reaction product or polymer was discharged and cooled under nitrogen atmosphere. The solution viscosity of the polymer was measured at 20°c with a 10% aqueous sodium hydroxide solution. The viscosity-average molecular weight calculated from the solution viscosity was $\overline{M}v$ = 21,000.

The data obtained with a DSC (differential scanning calorimeter, Perkin Elmer, Model 2C) indicated a

glass transition point of Tg = 121 ° C. The photoelasticity constant (measured with an apparatus made by the inventors) was C = 45 Brewsters, $10^{-12}$ $m^2/N$. The photoelasticity constant was obtained by substituting the formula (1) above for varied amounts of tensile stress applied in the longitudinal direction of a sample measuring 50 × 10 × 1 mm. The photoelasticity constant of 2,2-bis-(4-hydroxyphenyl)propane was C = 82 Brewsters, $10^{-/2}$ $m^2/N$.

Example 22

In a three-mouth flask equipped with a stirrer, thermometer, gas inlet, and exhaust tube were placed 174 parts by weight of 4,4′-dihydroxy-2,2,2-triphenylethane and 187 parts by weight of 2,2-bis(4-hydroxy-3-isopropylphenyl)propane, which were dissolved in dichloromethane. To the solution was further added dichloromethane. While being vigorously stirred, phosgene was introduced into the flask through an empty scrubbing bottle, water-filled scrubbing bottle, and empty scrubbing bottle connected one after another from a cylinder. During the introduction of phosgene, the reaction temperature was kept below 25 ° C by water cooling. As condensation proceeded, the reaction liquid became viscous. After the reaction, methanol was poured into the reaction liquid, and the resulting precipitate was filtered off and washed with water repeatedly. The thus obtained polycarbonate was dissolved in dichloromethane and reprecipitated with methanol, followed by drying. The solution viscosity of the polycarbonate was measured at 20 ° C using dichloromethane as a solvent. The viscosity-average molecular weight calculated from the solution viscosity was $\overline{M}v$ = 23,000.

The glass transition point was Tg = 121 ° C and the photoelasticity constant was C = 45 Brewsters ($10^{-12}$ $m^2/N$).

In the above shown examples, the viscosity-average molecular weight was determined by measurement of the intrinsic viscosity according to the below shown formula, corresponding to that of bisphenol-A polycarbonate.

$[\eta] = 1.11 \times 10^{-4} M^{0.82}$ [E. Miller & O. Bayer, U.S.P. 2,999,844 (1961)]

which represents the relationship between the molecular weight M and the intrinsic viscosity $[\eta]$ of bisphenol-A polycarbonate measured at 20 ° C using methylene chloride solution.

Application Example to Optical Disk

The polycarbonate obtained in each of Examples 9, 10, 19, 20, 21 and 22 was used to make a recording disk and examined in view of optical recording characteristics.

The polycarbonate was molded into a disk base 130 mm in diameter and 1.2 mm in thickness using a injection molding machine ("Dynamelter", made by Meiki Seisakusho). On this base plate was formed an optomagnetic recording film, 100 nm (1000 Å) thick, using an alloy target of $Tb_{23.5}Fe_{64.2}Co_{12.3}$ (atom%) in a sputtering apparatus (made by Nippon Shinku Co., Ltd.). Using the same sputtering apparatus, the recording film was covered with a protecting film, 100 nm (1000 Å) thick, of inorganic glass disclosed in Japanese Patent Laid-open No. 177449/1985. The performance of the thus obtained optomagnetic disk was evaluated in terms of CN ratio, BER, and the change of CN ratio that takes place after aging at 60 ° C and 90 %RH. The results are shown in Table 1.

Table 1

| Sample No. | Birefringence (Δn single pass) | CN (dB) (note 1) | BER (bit error rate) | Change (%) of CN after 30 days (note 2) |
|---|---|---|---|---|
| Example 9 | 8 | 53 | $5 \times 10^{-6}$ | 90 |
| Example 10 | 5 | 55 | $2 \times 10^{-6}$ | 95 |
| Example 19 | 4 | 55 | $2 \times 10^{-6}$ | 95 |
| Example 20 | 3 | 56 | $1 \times 10^{-6}$ | 96 |
| Example 21 | 6 | 55 | $4 \times 10^{-6}$ | 94 |
| Example 22 | 4 | 57 | $2 \times 10^{-6}$ | 95 |
| Comparative Example (note 3) | 20 | 46 | $5 \times 10^{-5}$ | 85 |

Note 1. CN ratio: Measured at 7 mW of writing power, 1 mW of reading power, 1 MHz of carrier frequency, and 30 kHz of resolution bandwidth.

Note 2. Change (%) of CN: Expressed by the ratio of the initial CN ratio to the CN ratio measured after 30 days of aging at 60 °C and 90 %RH.

Note 3. Comparative Example: An optomagnetic disk prepared in the same manner as mentioned above from known polycarbonate (AD-5503®, a product of Teijin Kasei Co., Ltd., being of the bisphenol A type and having an average molecular weight of 17,000).

It is noted from Table 1 that the polycarbonate copolymer used in this invention has a greatly improved CN ratio on account of the reduced birefringence and that it has also good durability.

## Claims

**1.** An aromatic polycarbonate obtained from 97 to 3 mole% of 4,4'-dihydroxy-2,2,2-triphenylethane and 3 to 97 mole% of 2,2-bis(4-hydroxy-3-isopropylphenyl)propane through a carbonate linkage.

**2.** The aromatic polycarbonate of claim 1 which is a copolymer of 90 to 10 mole% of 4,4'-dihydroxy-2,2,2-triphenylethane and 10 to 90 mole% of 2,2-bis(4-hydroxy-3-isopropylphenyl)propane.

**3.** The aromatic polycarbonate of claim 1 or 2 which has a viscosity-average molecular weight of from 10,000 to 100,000.

**4.** The aromatic polycarbonate of claim 3 which has a viscosity-average molecular weight of from 13,000 to 50,000.

**5.** An optical information recording disk comprising a substrate made of an aromatic polycarbonate obtained from (1) 2,2-bis(4-hydroxy-3-isopropylphenyl)propane, (2) 2,2-bis(4-hydroxyphenyl)propane and 2,2-bis(4-hydroxy-3-isopropylphenyl)propane or (3) 4,4'-dihydroxy-2,2,2-triphenylethane and 2,2-bis(4-hydroxy-3-isopropylphenyl)propane through a carbonate linkage,
and a recording layer coated on said substrate, wherein the polycarbonate has a viscosity-average molecular weight of from 1000 to 100,000.

**6.** The optical disk of claim 5, in which the polycarbonate has a viscosity-average molecular weight of from 10,000 to 100,000.

## Revendications

**1.** Polycarbonate aromatique obtenu à partir de 97 à 3 % en moles de 4,4'-dihydroxy-2,2,2-triphényléthane et de 3 à 97 % en moles de 2,2-bis(4-hydroxy-3-isopropylphényl)propane au moyen d'un chaînon de liaison carbonate.

**2.** Polycarbonate aromatique selon la revendication 1, qui est un copolymère de 90 à 10 % en moles de 4,4'-dihydroxy-2,2,2-triphényléthane et de 10 à 90 % en moles de 2,2-bis(4-hydroxy-3-isopropylphényl)propane.

3. Polycarbonate aromatique selon la revendication 1 ou 2, qui a une masse moléculaire moyenne viscosimétrique allant de 10 000 à 100 000.

4. Polycarbonate aromatique selon la revendication 3, qui a une masse moléculaire moyenne viscosimétrique allant de 13 000 à 50 000.

5. Disque d'enregistrement optique d'informations, comprenant un support constitué d'un polycarbonate aromatique obtenu à partir de (1) 2,2-bis(4-hydroxy-3-isopropylphényl)propane, (2) 2,2-bis(4-hydroxyphényl)propane et 2,2-bis(4-hydroxy-3-isopropylphényl)propane ou (3) 4,4'-dihydroxy-2,2,2-triphényléthane et 2,2-bis(4-hydroxy-3-isopropylphényl)propane au moyen d'un chaînon de liaison carbonate,
et d'une couche d'enregistrement appliquée sur ledit support, dans lequel le polycarbonate a une masse moléculaire moyenne viscosimétrique allant de 1 000 à 100 000.

6. Disque optique selon la revendication 5, dans lequel le polycarbonate a une masse moléculaire moyenne viscosimétrique allant de 10 000 à 100 000.

**Patentansprüche**

1. Aromatisches Polycarbonat, erhalten aus 97 bis 3 Mol-% 4,4'-Dihydroxy-2,2,2-triphenylethan und 3 bis 97 Mol-% 2,2-Bis(4-hydroxy-3-isopropylphenyl)propan durch eine Carbonatbindung.

2. Aromatisches Polycarbonat nach Anspruch 1, welches ein Copolymer aus 90 bis 10 Mol-% 4,4'-Dihydroxy-2,2,2-triphenylethan und 10 bis 90 Mol-% 2,2-Bis(4-hydroxy-3-isopropylphenyl)propan ist.

3. Aromatisches Polycarbonat nach Anspruch 1 oder 2, welches ein viskositätsdurchschnittliches Molekulargewicht von 10000 bis 100000 besitzt.

4. Aromatisches Polycarbonat nach Anspruch 3, welches ein viskositätsdurchschnittliches Molekulargewicht von 13000 bis 50000 besitzt.

5. Optische Informationsaufzeichnungsplatte, umfassend ein Substrat, hergestellt aus einem aromatischen Polycarbonat, erhalten aus (1) 2,2-Bis(4-hydroxy-3-isopropylphenyl)propan, (2) 2,2-Bis(4-hydroxyphenyl)propan und 2,2-Bis(4-hydroxy-3-isopropylphenyl)propan
oder (3) 4,4'-Dihydroxy-2,2,2-triphenylethan und 2,2-Bis(4-hydroxy-3-isopropylphenyl)propan durch eine Carbonatbindung, und eine Aufzeichnungsschicht,
aufgebracht auf das Substrat, worin das Polycarbonat ein viskositätsdurchschnittliches Molekulargewicht von 1000 bis 100000 besitzt.

6. Optische Platte nach Anspruch 5, worin das Polycarbonat ein viskositätsdurchschnittliches Molekulargewicht von 10000 bis 100000 besitzt.

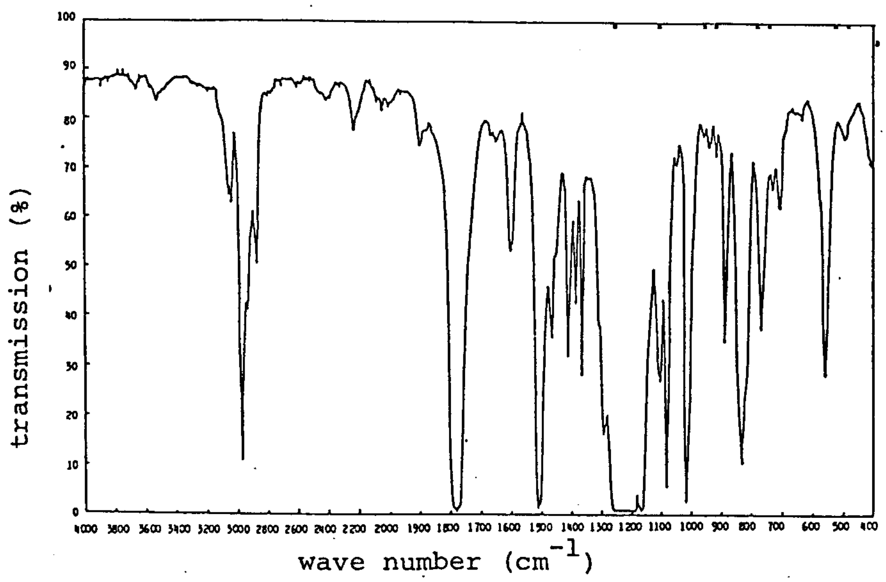


Fig. 1

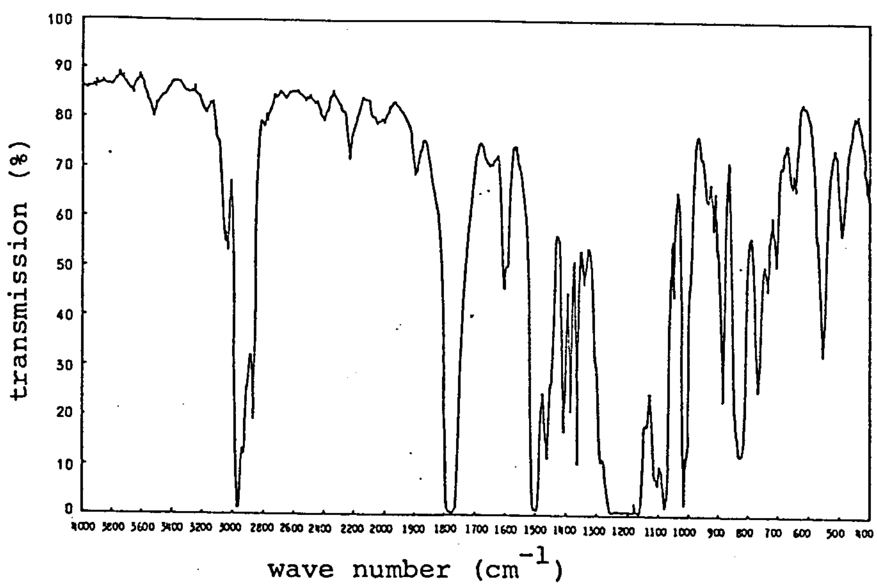


Fig. 3

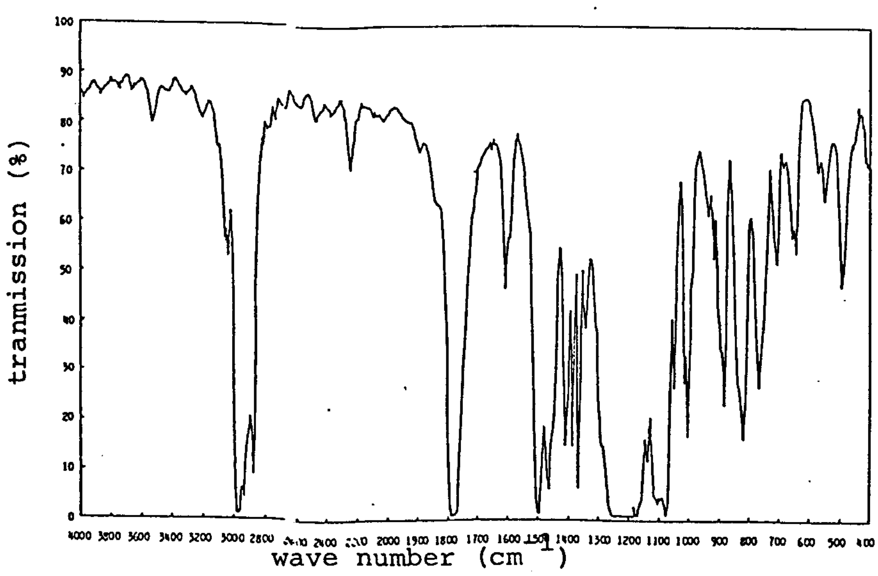


Fig. 5

Fig. 2

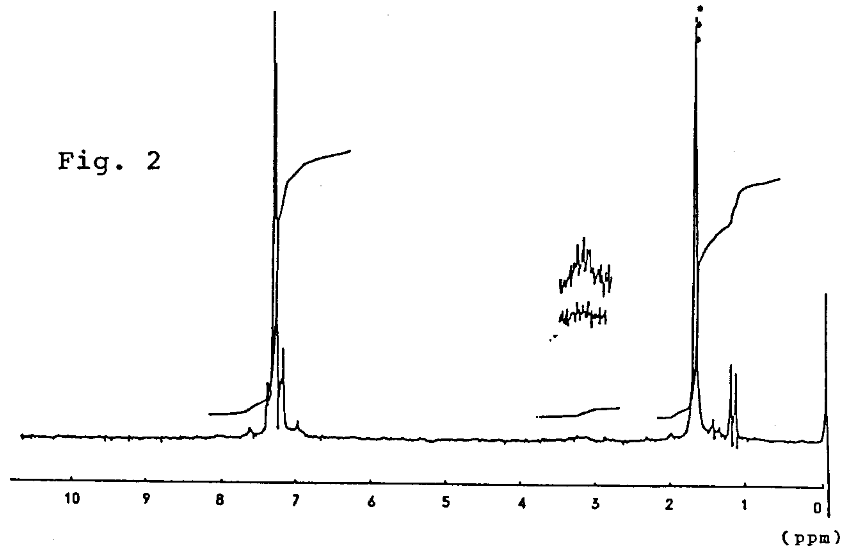


Fig. 4

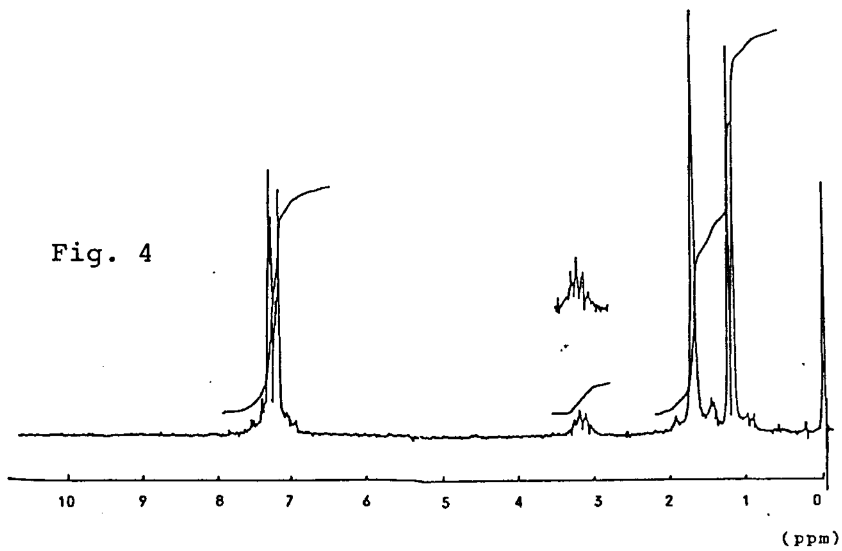


Fig. 6

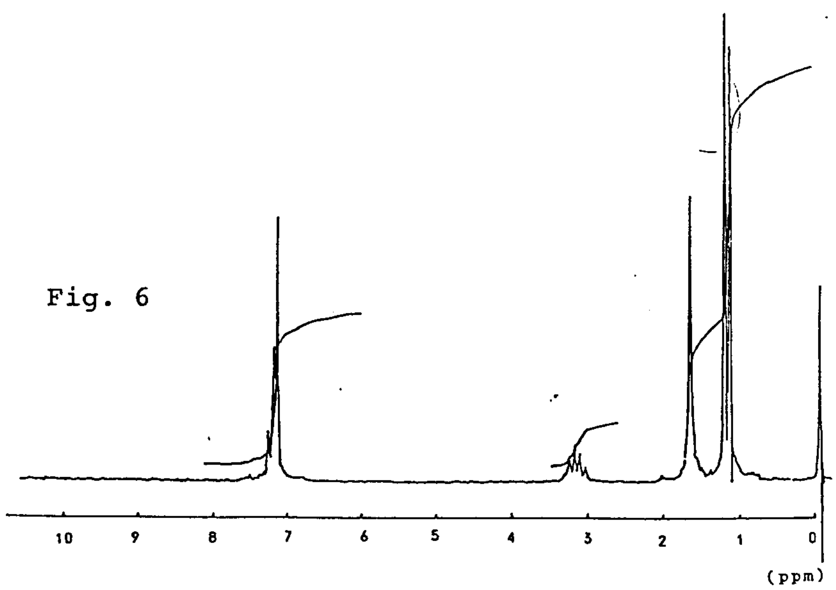

Fig. 7

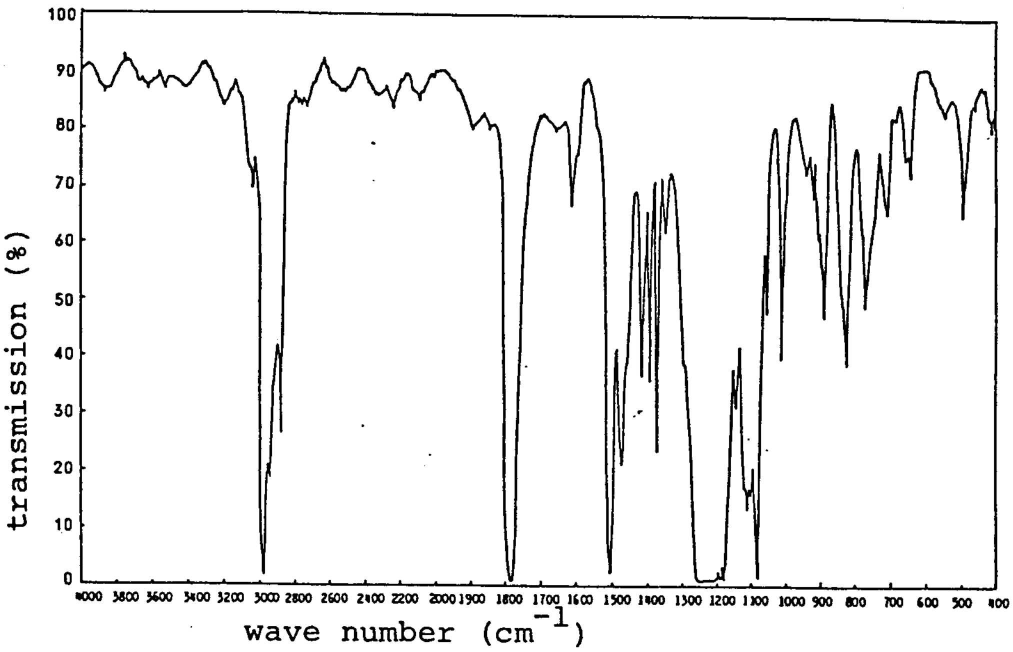
100
90
80
70
60
50
40
30
20
10
0
transmission (%)
4000 3800 3600 3400 3200 3000 2800 2600 2400 2200 2000 1900 1800 1700 1600 1500 1400 1300 1200 1100 1000 900 800 700 600 500 400
wave number ($cm^{-1}$)

Fig. 8

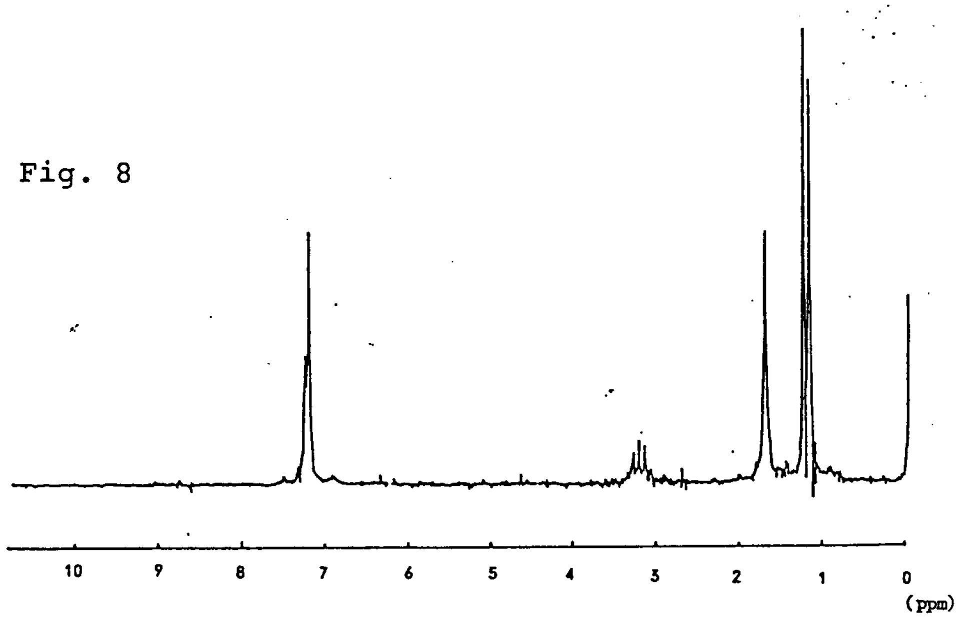
10 9 8 7 6 5 4 3 2 1 0
(ppm)